# EUROPÄISCHE PATENTANMELDUNG

(11) **EP 3 825 066 A1**
(43) Veröffentlichungstag der Anmeldung: **26.05.2021**
(21) Anmeldenummer: 19210583.1
(22) Anmeldetag: 21.11.2019
(51) Int. Cl.: B25F 5/00

(54) **VERFAHREN ZUM BETREIBEN EINER HANDGEFÜHRTEN WERKZEUGMASCHINE UND HANDGEFÜHRTE WERKZEUGMASCHINE**

(71) Anmelder: Hilti Aktiengesellschaft, 9494 Schaan (LI)
(72) Erfinder: Friedmann, Jan, 86920 Denklingen (DE)
(74) Vertreter: Hilti Aktiengesellschaft Corporate Intellectual Property

(57) **Zusammenfassung**

Die Erfindung betrifft ein Verfahren zum Betreiben einer handgeführten Werkzeugmaschine (1) mit einem mit einer Abtriebswelle (7) in Wirkverbindung bringbaren Werkzeug (3), wobei die Werkzeugmaschine (1) eine Antriebseinrichtung (4) zur Betätigung der Abtriebswelle (7), eine Steuerungseinrichtung (8) zur Betätigung der Antriebseinrichtung (4) und wenigstens eine mit der Steuerungseinrichtung (8) wirkverbundene Sensoreinrichtung (9, 10) aufweist. Das Verfahren ist durch die folgenden Schritte gekennzeichnet:
- Ermittlung eines Wertes einer Vorschubgeschwindigkeit der Werkzeugmaschine (1) mittels der wenigstens einen Sensoreinrichtung (10);
- Ermittlung eines Drehzahlwertes der Abtriebswelle (7);
- Ermittlung eines Ausgabewertes durch die Steuerungseinrichtung (8) anhand des Drehzahlwertes der Abtriebswelle (7) und des Wertes der Vorschubgeschwindigkeit; und
- Vordefinierte Ansteuerung einer Ausgabeeinrichtung (11) und/oder vordefinierte Ansteuerung der Antriebseinrichtung (4) durch die Steuerungseinrichtung (8) anhand des ermittelten Ausgabewertes.

Es wird weiterhin eine Werkzeugmaschine (1) zur Durchführung eines derartigen Verfahrens beschrieben.

## Beschreibung

Die Erfindung betrifft ein Verfahren zum Betreiben einer handgeführten Werkzeugmaschine mit einem mit einer Abtriebswelle insbesondere drehbar in Wirkverbindung bringbaren Werkzeug und eine handgeführte Werkzeugmaschine zur Durchführung eines derartigen Verfahrens.

Bei Werkzeugmaschinen, beispielsweise Kreissägen oder dergleichen besteht die Gefahr, dass die Werkzeugmaschine in ungünstigen Betriebszuständen betrieben wird und das beispielsweise als Sägeblatt ausgeführte Werkzeug in dem zu bearbeitenden Werkstück verklemmt. Dies kann zu einer Beschädigung des Werkzeugs und/oder des Werkstücks führen. Zudem kann es vorgesehen sein, dass die Werkzeugmaschine in dem ungünstigen Betriebszustand in einem nicht gewünschten Arbeitspunkt betrieben wird.

Es ist daher Aufgabe der vorliegenden Erfindung, ein Verfahren zum Betreiben einer handgeführten Werkzeugmaschine zu schaffen, mit dem auf einfache Weise ein Betrieb der handgeführten Werkzeugmaschine nahe eines optimalen Arbeitspunktes erreichbar ist und insbesondere eine Beschädigung eines mit der Werkzeugmaschine wirkverbundenen Werkzeugs in sämtlichen Betriebszuständen sicher verhinderbar ist. Darüber hinaus ist es Aufgabe der vorliegenden Erfindung, eine Werkzeugmaschine zur Durchführung eines derartigen Verfahrens zu schaffen.

Es wird somit ein Verfahren zum Betreiben einer handgeführten Werkzeugmaschine mit einem mit einer Abtriebswelle drehbar in Wirkverbindung bringbaren Werkzeug vorgeschlagen, wobei die Werkzeugmaschine eine Antriebseinrichtung zur Betätigung der Abtriebswelle, eine Steuerungseinrichtung zur Betätigung der Antriebseinrichtung und wenigstens eine mit der Steuerungseinrichtung wirkverbundene Sensoreinrichtung aufweist.
Erfindungsgemäß weist das Verfahren die folgenden Verfahrensschritte auf:
- Ermittlung eines Wertes einer Vorschubgeschwindigkeit der Werkzeugmaschine in der Vorschubrichtung mittels der wenigstens einen Sensoreinrichtung,
- Ermittlung eines Drehzahlwertes der Abtriebswelle,
- Ermittlung eines Ausgabewertes durch die Steuerungseinrichtung anhand des Drehzahlwertes der Abtriebswelle und des Wertes der Vorschubgeschwindigkeit; und
- Vordefinierte Ansteuerung einer Ausgabeeinrichtung und/oder vordefinierte Ansteuerung der Antriebseinrichtung durch die Steuerungseinrichtung anhand des ermittelten Ausgabewertes.

Mit einer erfindungsgemäßen Ausführungsform eines Verfahrens zum Betreiben einer Werkzeugmaschine ist auf einfache Weise ein Betrieb der handgeführten Werkzeugmaschine zumindest nahe eines optimalen Arbeitspunktes erzielbar und eine Beschädigung eines mit der Werkzeugmaschine wirkverbundenen Werkzeugs in sämtlichen Betriebszuständen sicher verhinderbar. Dies wird dadurch erreicht, dass in Abhängigkeit des Drehzahlwertes und des Wertes der Vorschubgeschwindigkeit ein aktueller Betriebszustand der Werkzeugmaschine ermittelt wird ist und von der Steuerungseinrichtung auf unerwünschte oder ungünstige Betriebszustände durch eine vordefinierte Ansteuerung einer Ausgabeeinrichtung und eine hierdurch verbundene Informationsweitergabe an den Anwender oder über eine vordefinierte Ansteuerung der Antriebseinrichtung reagiert wird. Bei Vorliegen eines ungünstigen Betriebszustands kann die Werkzeugmaschine durch eine Information des Anwenders mit entsprechender Reaktion des Anwenders oder über entsprechende Ansteuerung der Antriebseinrichtung schnell von dem ungünstigen Betriebszustand in einen günstigen Betriebszustand überführt werden. Insbesondere eine Beschädigung des Werkzeugs und/oder des zu bearbeitenden Werkstücks kann hierdurch sicher verhindert werden.

Bei der handgeführten Werkzeugmaschine kann es sich sowohl um Werkzeugmaschinen mit einem in einer drehenden Bewegung angetriebenen Werkzeug, wie beispielsweise einer Sägemaschine, insbesondere einer Kreissäge, einer Bohrmaschine, einer Schleifmaschine oder dergleichen oder um eine Werkzeugmaschine mit einem andersartig angetriebenen Werkzeug, wie beispielsweise einer Stichsäge, oder dergleichen handeln.

Die Ermittlung des Drehzahlwertes der Abtriebswelle kann beispielsweise mittels einer mit der Abtriebswelle zusammenwirkenden Sensoreinrichtung, insbesondere eines Winkelsensors, beispielsweise über einen mit einer Magnetscheibe zusammenwirkenden Hallsensor, oder durch eine Auswertung eines Motorstroms ermittelt werden.

Es kann auch vorgesehen sein, dass eine aktuelle Vorschubrichtung der handgeführten Werkzeugmaschine ermittelt wird, wobei diese gegebenenfalls von der Steuerungseinrichtung zur Ermittlung des Ausgabewertes verwendet wird.

Bei einer vorteilhaften Ausführungsform eines Verfahrens nach der Erfindung wird eine von der Antriebseinrichtung aufgenommene Leistung ermittelt, wobei die Steuerungseinrichtung den Ausgabewert unter Berücksichtigung der von der Antriebseinrichtung aufgenommenen Leistung ermittelt. Mit einem derartigen Verfahren kann ein aktueller Betriebszustand besonders genau ermittelt werden, wodurch eine Beschädigung des Werkzeugs bzw. des Werkstücks besonders sicher verhinderbar ist.

Um aus den ermittelten Werten einen Ausgabewert zu generieren, kann es vorgesehen sein, dass die Steuerungseinrichtung den Ausgabewert anhand einer in der Steuerungseinrichtung hinterlegten Look-up-Tabelle ermittelt wird. Alternativ oder zusätzlich hierzu kann es vorgesehen sein, dass der Ausgabewert von der Steuerungseinrichtung durch Anwendung eines in der Steuerungseinrichtung hinterlegten Algorithmus auf den ermittelten Drehzahlwert und den Wert der Vorschubgeschwindigkeit ermittelt wird.

Eine Unterscheidung zwischen einem günstigen Betriebszustand und einem ungünstigen Betriebszustand ist besonders genau und zutreffend möglich, wenn aus den Vorschubgeschwindigkeitswerten ein mittlerer Geschwindigkeitswert über einen definierten Zeitraum ermittelt wird und dieser für die Ermittlung des Ausgabewerts von der Steuerungseinrichtung verwendet wird. Der mittlere Geschwindigkeitswert kann insbesondere durch Anwendung eines gleitenden Mittelwertfilters für die Geschwindigkeitswerte ermittelt werden.

Es kann vorgesehen sein, dass mittels der Ausgabeeinrichtung optische, akustische und/oder haptische Signale ausgebbar sind, wobei die ausgegebenen Signale abhängig von dem ermittelten Ausgabewert der Steuerungseinrichtung sind. Beispielsweise kann vorgesehen sein, dass einem Anwender über die Ausgabeeinrichtung ein Farbcode angezeigt wird, wobei beispielsweise eine grüne Anzeige einem günstigen Betriebszustand und eine rote Anzeige einem ungünstigen Betriebszustand entspricht. Es kann auch vorgesehen sein, dass der Anwender über die Ausgabeeinrichtung darüber informiert wird, ob eine Vorschubgeschwindigkeit zu gering ist, einen günstigen Wert aufweist oder zu groß ist.

Um eine Beschädigung des Werkzeugs und/oder eines Werkstücks besonders sicher verhindern zu können, ist es bei einer vorteilhaften Ausführungsform eines Verfahrens nach der Erfindung vorgesehen, dass die Steuerungseinrichtung die Antriebseinrichtung in Abhängigkeit des ermittelten Ausgabewerts ansteuert und/oder regelt. Beispielsweise kann vorgesehen sein, dass eine Leistungsabgabe der Antriebseinrichtung entsprechend des ermittelten Ausgabewertes geregelt oder angesteuert wird, so dass beispielsweise eine Drehzahl der Abtriebswelle entsprechenden Anwendungsfalls erhöht oder reduziert wird.

Es kann beispielsweise vorgesehen sein, dass in der Steuerungseinrichtung wenigstens ein Schwellwert für die Vorschubgeschwindigkeit, wenigstens ein Schwellwert für die Drehzahl der Abtriebswelle und wenigstens ein Schwellwert für die aufgenommene Leistung der Antriebseinrichtung hinterlegt ist, um eine möglichst genaue Unterscheidung zwischen einem günstigen Betriebszustand und einem ungünstigen Betriebszustand der Werkzeugmaschine unterscheiden zu können.

Ein Betriebszustand, in dem der Wert der Vorschubgeschwindigkeit größer als der entsprechende Schwellwert, der Drehzahlwert der Abtriebswelle größer als der entsprechende Schwellwert und die aufgenommene Leistung der Antriebseinrichtung größer als der entsprechende Schwellwert ist, kann beispielsweise als günstiger Betriebszustand definiert sein, so dass keine Änderung erforderlich ist.

Ein Betriebszustand, in dem der Wert der Vorschubgeschwindigkeit kleiner als der entsprechende Schwellwert, der Drehzahlwert der Abtriebswelle größer als der entsprechende Schwellwert und die aufgenommene Leistung der Antriebseinrichtung kleiner als der entsprechende Schwellwert ist, kann beispielsweise als ungünstiger Betriebszustand definiert sein, der beispielsweise durch eine Erhöhung der Vorschubgeschwindigkeit oder durch eine Reduktion der Drehzahl der Abtriebswelle in einen günstigen Betriebszustand überführbar ist.

Ein Betriebszustand, in dem der Wert der Vorschubgeschwindigkeit kleiner als der entsprechende Schwellwert, der Drehzahlwert der Abtriebswelle kleiner als der entsprechende Schwellwert und die aufgenommene Leistung der Antriebseinrichtung größer als der entsprechende Schwellwert ist, kann beispielsweise als ungünstiger Betriebszustand definiert sein, der beispielsweise durch eine Reduktion der Vorschubgeschwindigkeit der Werkzeugmaschine oder durch eine Erhöhung der Drehzahl der Abtriebswelle in einen günstigen Betriebszustand überführbar ist.

Eine Änderung des aktuellen Betriebszustands ist dabei entweder automatisiert durch eine entsprechende Ansteuerung der Antriebseinrichtung durch die Steuerungseinrichtung oder durch den Anwender möglich, wobei dem Anwender durch die Steuerungseinrichtung mithilfe der Ausgabeeinrichtung eine Information über den aktuellen Betriebszustand und/oder über die zu treffenden Maßnahmen vermittelt wird.

Bei einer vorteilhaften Ausführungsform eines Verfahrens nach der Erfindung ist vorgesehen, dass die wenigstens eine Sensoreinrichtung Linearbeschleunigungswerte jeweils in drei Raumrichtungen ermittelt, wobei die Vorschubgeschwindigkeit der Werkzeugmaschine nach einer Elimination der Erdbeschleunigung durch eine Integration der Linearbeschleunigungswerte ermittelt wird. Auf diese Weise kann eine Vorschubgeschwindigkeit und vorzugsweise auch eine Vorschubrichtung einfach und genau ermittelt werden. Es kann auch vorgesehen sein, dass mittels der Sensoreinrichtung oder einer weiteren Sensoreinrichtung neben den Linearbeschleunigungswerten auch Drehratenwerte ermittelt werden. Hierdurch kann eine gegebenenfalls stattfindende Rotation der Werkzeugmaschine und deren Einfluss auf eine Vorschubbewegung auch in einem von der Sensoreinrichtung entfernten Punkt, beispielsweise einer Drehachse des Werkzeugs, ermittelt werden.

Des Weiteren wird die Aufgabe gelöst durch eine handgeführte Werkzeugmaschine zur Durchführung eines oben näher beschriebenen Verfahrens mit einem mit einer Abtriebswelle in Wirkverbindung bringbaren Werkzeug, wobei die Werkzeugmaschine eine Antriebseinrichtung zur Betätigung der Abtriebswelle, eine Steuerungseinrichtung zur Betätigung der Antriebseinrichtung und wenigstens eine mit der Steuerungseinrichtung wirkverbundene Sensoreinrichtung aufweist.

Die zum erfindungsgemäßen Verfahren angeführten Vorteile gelten entsprechend auch für eine erfindungsgemäß ausgeführte Werkzeugmaschine. Mit einer erfindungsgemäß ausgeführten handgeführten Werkzeugmaschine ist somit auf einfache und sichere Weise eine Unterscheidung zwischen einem günstigen Betriebszustand und einem ungünstigen Betriebszustand möglich, wobei hierdurch insbesondere eine Beschädigung eines mit der Werkzeugmaschine wirkverbundenen Werkzeugs in sämtlichen Betriebszuständen sicher verhinderbar ist.

Bei der handgeführten Werkzeugmaschine handelt es sich insbesondere um eine mit einer im Wesentlichen linearen Vorschubbewegung betriebenen Werkzeugmaschine, wie beispielsweise eine Sägemaschine, eine Kreissäge, eine Stichsäge, eine Bohrmaschine oder dergleichen. Grundsätzlich kann es sich aber auch um Werkzeugmaschinen mit einer nicht linearen Vorschubbewegung, wie einer Stichsäge, einer Schleifmaschine oder dergleichen handeln.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

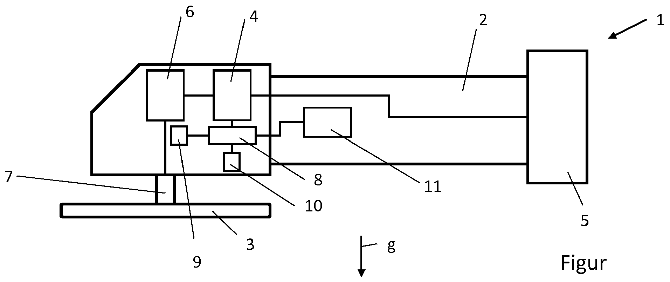

Die einzige Figur der Zeichnung zeigt eine stark vereinfachte Seitenansicht einer hier als Winkelschleifer ausgeführten Handwerkzeugmaschine, wobei an einer Abtriebswelle des Winkelschleifers ein Werkzeug angeordnet ist.

Die Figur zeigt eine handgeführte Werkzeugmaschine bzw. Handwerkzeugmaschine 1 nach der Erfindung, die in der gezeigten Darstellung als Winkelschleifer ausgeführt ist. Unter einer handgeführten Werkzeugmaschine 1 wird dabei eine Werkzeugmaschine verstanden, die von einem Anwender im Wesentlichen frei im Raum bewegbar ist.

Entsprechend einer alternativen Ausgestaltungsform kann die handgeführte Werkzeugmaschine 1 auch als Werkzeugmaschine ausgeführt sein, die in einer insbesondere ausschließlich linearen Vorschubbewegung betrieben wird, wobei es sich hierbei beispielsweise um eine Sägemaschine, insbesondere eine Kreissäge, eine Bohrmaschine oder dergleichen handelt.

Die vorliegend als Winkelschleifer ausgeführte Handwerkzeugmaschine 1 weist ein Gehäuse 2 und ein beispielsweise als Trennscheibe ausgeführtes Werkzeug 3 auf. Das Gehäuse 2 weist vorzugsweise wenigstens einen Haltebereich auf, an dem ein Anwender die Werkzeugmaschine 1 mit einer oder beiden Händen halten und führen kann. Das Werkzeug 3 ist von einem insbesondere als Elektromotor ausgeführten Antrieb bzw. einer Antriebseinrichtung 4 betätigbar, der insbesondere über einen mit der Handwerkzeugmaschine 1 verbindbaren Akkumulator 5 mit Strom versorgbar ist. Gemäß einer alternativen und nicht in der Figur gezeigte Ausgestaltungsform kann die Handwerkzeugmaschine 1 auch über ein Stromkabel mit elektrischem Strom aus einem Netzwerk versorgt werden.

Der Antrieb 4 zur Betätigung des Werkzeugs 3 in einer drehenden Bewegung ist ebenso wie ein Getriebe 6 und eine Abtriebswelle 7 im Inneren des Gehäuses 2 angeordnet. Der beispielsweise als Elektromotor ausgeführte Antrieb 4, das Getriebe 6 und die Abtriebswelle 7 sind dabei so in dem Gehäuse 2 zueinander angeordnet und miteinander verbunden, dass ein von dem Elektromotor 4 erzeugtes Drehmoment auf das Getriebe 6 und schließlich auf die Abtriebswelle 7 übertragen werden kann. Ein sich frei drehendes und nach unten an dem Gehäuse 2 herausragendes Ende der Abtriebswelle 7 ist mit dem hier als Trennscheibe 3 ausgeführten Werkzeug beispielsweise über eine nicht näher ersichtliche Spanneinrichtung verbunden. Das Drehmoment der Abtriebswelle 7 kann somit auf die Trennscheibe 3 übertragen werden.

Bei einer alternativen Ausführung der Erfindung kann es auch vorgesehen sein, dass das Werkzeug von der Antriebseinrichtung nicht in einer drehenden, sondern beispielsweise einer linearen, oszillierenden oder kombinierten Bewegung oder dergleichen angetrieben wird, wobei insbesondere eine Drehung einer Abtriebswelle in die entsprechende Bewegung des Werkzeugs überführt wird.

Die Handwerkzeugmaschine 1 weist weiterhin eine Steuerungseinrichtung 8 sowie vorliegend zwei Sensoreinrichtungen 9 und 10 auf. Die Sensoreinrichtungen 9 und 10 sind mit der Steuerungseinrichtung 8 elektrischen und elektronisch verbunden. Signale können zwischen den Sensoreinrichtungen 9 und 10 und der Steuerungseinrichtung 8 gesendet werden. Die Steuerungseinrichtung 8 ist wiederum mit dem Elektromotor 4 und dem Akkumulator 5 elektrisch und elektronisch verbunden. Signale können zwischen den Sensoreinrichtungen 9 und 10 und dem Elektromotor 4 sowie dem Akkumulator 5 gesendet werden. Die Steuerungseinrichtung 8 dient unter anderem zum Steuern und Regeln des Antriebs 4 sowie der Stromversorgung der Handwerkzeugmaschine 1.

Die erste Sensoreinrichtung 9 ist vorliegend zur Ermittlung einer Drehzahl der Abtriebswelle 7 ausgeführt und beispielsweise als Winkelsensor ausgeführt. Die von der ersten Sensoreinrichtung 9 ermittelten Drehzahlwerte der Abtriebswelle 7 werden von der ersten Sensoreinrichtung 9 an die Steuerungseinrichtung 8 übermittelt. Alternativ hierzu kann es auch sein, dass Drehzahlwerte der Abtriebswelle 7 über eine Auswertung eines Motorstroms des Elektromotors 4 ermittelt werden.

Die zweite Sensoreinrichtung 10 ist vorliegend als Gyrosensor ausgeführt, mittels dem Linearbeschleunigungswerte in drei Raumachsen ermittelbar sind. Die von der zweiten Sensoreinrichtung 10 ermittelten Linearbeschleunigungswerte werden von der zweiten Sensoreinrichtung 10 an die Steuerungseinrichtung 8 übermittelt.

Die Steuerungseinrichtung 8 ist dazu ausgeführt, die auf die Werkzeugmaschine 1 wirkende Erdbeschleunigung g von den ermittelten Linearbeschleunigungswerten zu subtrahieren, so dass von der Erdbeschleunigung bereinigte Linearbeschleunigungswerten ermittelt werden. Aus diesen bereinigten Linearbeschleunigungswerten sind durch eine Integration Geschwindigkeitswerte in den Raumachsen ermittelbar. Aus diesen Geschwindigkeitswerten ist wiederum eine Bewegungsrichtung der Werkzeugmaschine 1 mit einer entsprechenden Bewegungsgeschwindigkeit ermittelbar.

Weiterhin kann es vorgesehen sein, dass eine von der Antriebseinrichtung 4 aufgenommene Leistung ermittelt wird.

In der Steuerungseinrichtung 8 ist eine Look-up-Tabelle hinterlegt, mittels der anhand der jeweils ermittelten, aktuell vorliegenden Werte ein aktueller Betriebszustand der Werkzeugmaschine 1 beurteilt wird. Hierzu werden vorliegend die Bewegungsgeschwindigkeit der Werkzeugmaschine 1, d. h. die Vorschubgeschwindigkeit der Werkzeugmaschine 1, die von der ersten Sensoreinrichtung 9 ermittelten Drehzahlwerte der Abtriebswelle 7 und die von der Antriebseinrichtung 4 aufgenommene Leistung verwendet.

Von der Steuerungseinrichtung 8 wird entsprechend ermittelt, ob ein gewünschter Betriebszustand oder ein unerwünschter Betriebszustand vorliegt. Bei der Ermittlung eines gewünschten Betriebszustands sind keine Maßnahmen zu ergreifen und der Betrieb der Werkzeugmaschine 1 kann in unverändertem Umfang fortgesetzt werden. Die Steuerungseinrichtung 8 gibt dem Anwender hierzu vorliegend über eine hier als Anzeigeeinrichtung 11 ausgeführte Ausgabeeinrichtung eine Rückmeldung, wobei die Anzeigeeinrichtung 11 hierzu beispielsweise eine grüne Farbe ausgibt.

Wird dagegen von der Steuerungseinrichtung 8 anhand der Look-up-Tabelle ermittelt, dass ein unerwünschter Betriebszustand vorliegt und beispielsweise die Vorschubgeschwindigkeit im Vergleich zu den aktuell vorliegenden Drehzahlwerten der Abtriebswelle 7 und der aktuell vorliegenden Leistungsaufnahme der Antriebseinrichtung 7 zu klein oder zu groß sind, steuert die Steuerungseinrichtung 8 die Anzeigeeinrichtung 11 derart an, dass für den Anwender die aktuell im Vergleich zu den anderen Werten zu geringe oder zu hohe Vorschubgeschwindigkeit ersichtlich sind. Dies kann beispielsweise über eine Farbskala übermittelt werden. Es kann auch vorgesehen sein, dass dem Anwender eine Position der aktuellen Vorschubgeschwindigkeit im Vergleich zu den anderen Werten über Skala angezeigt wird, wobei ein Bereich einer zu niedrigen Vorschubgeschwindigkeit, ein Bereich einer günstigen Vorschubgeschwindigkeit und ein Bereich einer zu hohen Vorschubgeschwindigkeit jeweils im Verhältnis zu den weiteren aktuell vorliegenden Werten entspricht.

Neben der optischen Ausgabe kann es auch vorgesehen sein, dass die Ausgabeeinrichtung zur akustischen, haptischen oder einer kombinierten Ausgabe ausgeführt ist.

Es kann auch vorgesehen sein, dass in der Steuerungseinrichtung 8 ein Algorithmus hinterlegt ist, der einen aktuellen Betriebszustand anhand der erfassten oder berechneten Eingangswerte der Vorschubgeschwindigkeit, der Drehzahlwerte der Abtriebswelle 7 und der Leistungsaufnahme der Antriebseinrichtung 7 ermittelt.

Alternativ oder zusätzlich zu der Ansteuerung der Ausgabeeinrichtung 11 kann es auch vorgesehen sein, dass die Steuerungseinrichtung 8 anhand des ermittelten Betriebszustands der Werkzeugmaschine 1 die Antriebseinrichtung 8 entsprechend ansteuert oder regelt, um bei Vorliegen eines unerwünschten Betriebszustandes wiederum einen gewünschten Betriebszustand zu erreichen.

Zur Definition eines gewünschten Betriebszustandes und eines ungewünschten Betriebszustandes können in der Steuerungseinrichtung 8 beispielsweise für die Werte der Vorschubgeschwindigkeit, die Werte der Abtriebswelle 7 und die Leistungsaufnahme der Antriebseinrichtung 4 jeweils wenigstens ein Schwellwert vorgesehen sein, wobei beispielsweise anhand einer in der Steuerungseinrichtung 8 hinterlegten Matrix ermittelt wird, wann bei bestimmten Kombinationen von aktuellen Werten relativ zu den jeweiligen Schwellwerten ein gewünschter oder ein ungewünschter Betriebszustand vorliegt.

Somit kann ein gewünschter Betriebszustand beispielsweise ermittelt werden, wenn der aktuelle Wert der Vorschubgeschwindigkeit größer als der entsprechende Schwellwert, der aktuelle Drehzahlwert der Abtriebswelle 7 größer als der entsprechende Schwellwert und die aktuell aufgenommene Leistung der Antriebseinrichtung 4 größer als der entsprechende Schwellwert ist. In diesem Betriebszustand liegt ein günstiger Arbeitspunkt vor.

Ein Betriebszustand, in dem der aktuelle Wert der Vorschubgeschwindigkeit kleiner als der entsprechende Schwellwert, der aktuelle Drehzahlwert der Abtriebswelle 7 größer als der entsprechende Schwellwert und die aktuell aufgenommene Leistung der Antriebseinrichtung 4 kleiner als der entsprechende Schwellwert ist, kann beispielsweise als ungünstiger Betriebszustand definiert sein. Dieser ungünstige Betriebszustand kann beispielsweise durch eine Erhöhung der Vorschubgeschwindigkeit der Werkzeugmaschine 1 verlassen werden, wobei diese Information dem Anwender über die Ausgabeeinrichtung 11 übermittelt werden kann. Alternativ hierzu kann es vorgesehen sein, dass die Steuerungseinrichtung 8 die Antriebseinrichtung 4 derart ansteuert oder regelt, dass eine Drehzahl der Abtriebswelle 7 reduziert wird.

Ein Betriebszustand, in dem der aktuelle Wert der Vorschubgeschwindigkeit kleiner als der entsprechende Schwellwert, der aktuelle Drehzahlwert der Abtriebswelle kleiner als der entsprechende Schwellwert und die aktuell aufgenommene Leistung der Antriebseinrichtung 4 größer als der entsprechende Schwellwert ist, kann beispielsweise als ungünstiger Betriebszustand definiert sein. Dieser ungünstige Betriebszustand kann beispielsweise durch eine Reduktion der Vorschubgeschwindigkeit der Werkzeugmaschine 1 verlassen werden, wobei diese Information dem Anwender über die Ausgabeeinrichtung 11 übermittelt werden kann. Alternativ hierzu kann es vorgesehen sein, dass die Steuerungseinrichtung 8 die Antriebseinrichtung 4 derart ansteuert oder regelt, dass eine Drehzahl der Abtriebswelle 7 erhöht wird.

## Patentansprüche

1. Verfahren zum Betreiben einer handgeführten Werkzeugmaschine (1) mit einem mit einer Abtriebswelle (7) in Wirkverbindung bringbaren Werkzeug (3), wobei die Werkzeugmaschine (1) eine Antriebseinrichtung (4) zur Betätigung der Abtriebswelle (7), eine Steuerungseinrichtung (8) zur Betätigung der Antriebseinrichtung (4) und wenigstens eine mit der Steuerungseinrichtung (8) wirkverbundene Sensoreinrichtung (9, 10) aufweist, **gekennzeichnet durch** die Schritte:,
- Ermittlung eines Wertes einer Vorschubgeschwindigkeit der Werkzeugmaschine (1) mittels der wenigstens einen Sensoreinrichtung (10);
- Ermittlung eines Drehzahlwertes der Abtriebswelle (7);
- Ermittlung eines Ausgabewertes durch die Steuerungseinrichtung (8) anhand des Drehzahlwertes der Abtriebswelle (7) und des Wertes der Vorschubgeschwindigkeit; und
- Vordefinierte Ansteuerung einer Ausgabeeinrichtung (11) und/oder vordefinierte Ansteuerung der Antriebseinrichtung (4) durch die Steuerungseinrichtung (8) anhand des ermittelten Ausgabewertes.

2. Verfahren nach Anspruch 1, **dadurch gekennzeichnet, dass** eine von der Antriebseinrichtung (7) aufgenommene Leistung ermittelt wird, wobei die Steuerungseinrichtung (8) den Ausgabewert unter Berücksichtigung der von der Antriebseinrichtung (4) aufgenommenen Leistung ermittelt.

3. Verfahren nach einem der Ansprüche 1 oder 2, **dadurch gekennzeichnet, dass** der Ausgabewert von der Steuerungseinrichtung (8) anhand einer in der Steuerungseinrichtung (8) hinterlegten Look-up-Tabelle ermittelt wird.

4. Verfahren nach einem der vorhergehenden Ansprüche, **dadurch gekennzeichnet, dass** der Ausgabewert von der Steuerungseinrichtung (8) durch Anwendung eines in der Steuerungseinrichtung (8) hinterlegten Algorithmus auf den ermittelten Drehzahlwert und den Wert der Vorschubgeschwindigkeit ermittelt wird.

5. Verfahren nach einem der vorhergehenden Ansprüche, **dadurch gekennzeichnet, dass** aus den Vorschubgeschwindigkeitswerten ein mittlerer Geschwindigkeitswert über einen definierten Zeitraum ermittelt wird.

6. Verfahren nach einem der vorhergehenden Ansprüche, **dadurch gekennzeichnet, dass** mittels der Ausgabeeinrichtung (11) optische, akustische und/oder haptische Signale ausgebbar sind, wobei die ausgegebenen Signale abhängig von dem ermittelten Ausgabewert der Steuerungseinrichtung (8) sind.

7. Verfahren nach einem der vorhergehenden Ansprüche, **dadurch gekennzeichnet, dass** die Steuerungseinrichtung (8) die Antriebseinrichtung (4) in Abhängigkeit des ermittelten Ausgabewerts ansteuert und/oder regelt.

8. Verfahren nach einem der vorhergehenden Ansprüche, **dadurch gekennzeichnet, dass** die wenigstens eine Sensoreinrichtung (10) Linearbeschleunigungswerte jeweils in drei Raumrichtungen ermittelt, wobei die Vorschubgeschwindigkeit der Werkzeugmaschine (1) nach einer Elimination der Erdbeschleunigung (g) durch eine Integration der Linearbeschleunigungswerte ermittelt wird.

9. Handgeführte Werkzeugmaschine (1) zur Durchführung eines Verfahrens nach einem der Ansprüche 1 bis 8 mit einem mit einer Abtriebswelle (7) in Wirkverbindung bringbaren Werkzeug (3), wobei die Werkzeugmaschine (1) eine Antriebseinrichtung (4) zur Betätigung der Abtriebswelle (7), eine Steuerungseinrichtung (8) zur Betätigung der Antriebseinrichtung (4) und wenigstens eine mit der Steuerungseinrichtung (8) wirkverbundene Sensoreinrichtung (9, 10) aufweist.
